# EUROPÄISCHE PATENTSCHRIFT

(11) **EP 1 541 423 B1**
(45) Veröffentlichungstag und Bekanntmachung des Hinweises auf die Patenterteilung: **27.09.2006**
(21) Anmeldenummer: 04090438.5
(22) Anmeldetag: 16.11.2004
(51) Int. Cl.: B60R 16/02

(54) **Bordnetz für Kraftfahrzeuge**
Vehicle power network
Réseau de bord pour véhicules

(30) Priorität: 09.12.2003 DE 10358249
(43) Veröffentlichungstag der Anmeldung: 15.06.2005
(73) Patentinhaber: Volkswagen AG, 38436 Wolfsburg (DE)
(72) Erfinder: Hoppe, Gerd, 38108 Braunschweig (DE); Menzel Werner, 31226 Peine (DE); Fricke, Michael, 38350 Helmstedt (DE); Liebetanz, Wolfgang, 38104 Braunschweig (DE)
(74) Vertreter: Effert, Bressel und Kollegen

(56) Entgegenhaltungen:
- EP-A- 1 103 427
- DE-A1- 10 058 898
- US-B1- 6 275 001
- US-B1- 6 417 579
- US-B1- 6 433 442
- US-B1- 6 597 149

## Beschreibung

Die Erfindung betrifft ein Bordnetz für Kraftfahrzeuge gemäß dem Oberbegriff des Patentanspruchs 1.

Der Ladekreis einer Fahrzeugbatterie umfasst üblicherweise einen Generator, der über eine Ladeleitung mit der Fahrzeugbatterie verbunden ist. Dabei erzeugt der Generator an seinem Ausgang eine etwas höhere Spannung als die Nennspannung der Fahrzeugbatterie, so dass aufgrund der Spannungsdifferenz ein gerichteter Stromfluss vom Generator zur Fahrzeugbatterie fließt. Solange Generator und Fahrzeugbatterie räumlich direkt beieinander sind, ist die Ladeleitung sehr kurz und befindet sich in unfallgeschützten Bereichen des Kraftfahrzeuges. Aufgrund der Tatsache, dass die Anzahl der elektrischen Verbraucher in einem Kraftfahrzeug stetig zunimmt, wird es immer schwieriger, alle Verbraucher im Motorraum anzuordnen. Hinzu kommt die Tendenz, verstärkt zwei Batterien in Kraftfahrzeugen zu verwenden, wobei im Regelfall der Bauraum im Motorraum nur für eine Batterie ausreicht. Somit kommt es zu einer räumlichen Trennung zwischen Generator und Fahrzeugbatterie, was eine Verlängerung der Ladeleitung zur Folge hat. Damit nimmt jedoch die Gefahr zu, dass es beispielsweise in Folge eines Unfalls zu einem Kurzschluss auf der Ladeleitung kommt, wodurch Fahrzeugbrände verursacht werden können. Eine Lösung für dieses Problem wäre die Verlegung der Ladeleitung in unfallgeschützten Bereichen des Kraftfahrzeuges, was jedoch den Verkabelungsaufwand erhöht.

Was für die Ladeleitung ausgeführt wurde, gilt im gleichen Maße auch für eine Starterleitung, wenn aus der Batterie ein Starter bestromt werden soll.

Ein derartiger Bordnetz ist aus den US 6433442 B gemäß der Oberbegriff des Anspruchs 1 bekannt.

Aus der DE 101 122 912 A1 ist ein Ladekreis einer Fahrzeugbatterie bekannt, umfassend einen Generator und eine räumlich vom Generator getrennte Fahrzeugbatterie, die über eine Ladeleitung miteinander elektrisch verbunden sind, wobei zwischen Generator und Fahrzeugbatterie eine Einrichtung angeordnet ist, die einen Stromfluss von der Fahrzeugbatterie in Richtung des Generators verhindert. Die Einrichtung ist dabei vorzugsweise unmittelbar an der Fahrzeugbatterie angeordnet und als Leistungsdiode oder als Leistungsschalter mit Stromrichtungserkennung ausgebildet. Eine Absicherung der Starterleitung ist nicht offenbart.

Aus der DE 100 21 408 A1 ist ein Bordnetz für Kraftfahrzeuge bekannt, umfassend einen Generator, einen dem Generator zugeordneten Starter mit Starterschalter und eine mit dem Starter verbundene Batterie, die räumlich getrennt von dem Starter angeordnet ist, wobei der Starterschalter räumlich der Batterie zugeordnet ist, so dass nach Beendigung des Startvorgangs die Starterleitung spannungslos ist. Der Starterschalter ist dabei vorzugsweise als Leistungshalbleiter ausgebildet. Eine Absicherung einer notwendigen Ladeleitung ist nicht offenbart.

Aus der DE 100 28 834 A1 ist eine Vorrichtung zum Anlassen einer Bremskraftmaschine bekannt, umfassend einen Anlasser, ein Starterritzel, einen Magnetschalter, einen Zündanlassschalter, einen Anlasserschalter und eine Batterie, wobei Batterie und Anlasser voneinander räumlich getrennt sind, wobei der Anlasserschalter räumlich der Batterie zugeordnet ist, dem Starterritzel eine Einrichtung zur Erfassung der Einspurlage zugeordnet ist und der Anlasserschalter in Abhängigkeit der Einspurlage durch die Einrichtung zur Erfassung der Einspurlage schaltbar ist. Durch Öffnen des Anlasserschalters nach dem Startvorgang ist somit die Starterleitung spannungslos geschaltet. Eine Absicherung einer notwendigen Ladeleitung ist nicht offenbart.

Der Erfindung liegt daher das technische Problem zugrunde, ein Bordnetz zu schaffen, das bei einem einfachen Aufbau sowohl die Starter- als auch die Ladeleitung gegen Kurzschlüsse sichert.

Die Lösung des technischen Problems ergibt sich durch den Gegenstand mit den Merkmalen des Patentanspruchs 1. Weitere vorteilhafte Ausgestaltungen der Erfindung ergeben sich aus den Unteransprüchen.

Erfindungsgemäß sind die Starterleitung und die Ladeleitung als gemeinsame Start-Lade-Leitung ausgebildet, wobei parallel zu der Einrichtung, die einen Stormfluss von der Batterie in Richtung Generator verhindert, ein Starter-Batterie-Schalter angeordnet ist und in Reihe zum Starter ein Starterschalter angeordnet ist, wobei der Starter-Batterie-Schalter und der Starterschalter jeweils nur im Startvorgang geschlossen sind. Durch die gemeinsame Ausbildung von Starter- und Ladeleitung wird nicht nur die Leitungsverlegung vereinfacht, sondern auch erheblich Gewicht und Kosten eingespart. Durch den parallel zur Einrichtung angeordneten Starter-Batterie-Schalter kann dabei während des Startvorganges die Einrichtung überbrückt werden, wobei anschließend die Einrichtung die Absicherung der Ladeleitung übernimmt. Durch den Starterschalter wird dabei sichergestellt, dass im erregten Zustand des Generators der Starter nicht bestromt wird.

In einer bevorzugten Ausführungsform ist die Einrichtung dabei unmittelbar an der Batterie angeordnet, da ansonsten durch weitere Schutzmaßnahmen sichergestellt werden muss, dass Kurzschlüsse zwischen der Einrichtung und der Fahrzeugbatterie zuverlässig erfasst werden.

In einer weiteren bevorzugten Ausführungsform ist die Einrichtung als Leistungsdiode ausgebildet. Der Vorteil einer Leistungsdiode ist, dass diese bereits funktionell bei Vernachlässigung des Sperrstromes einen Stromfluss der Batterie zum Generator verhindert. Nachteilig ist hingegen der Spannungsabfall über die Diode.

In einer weiteren bevorzugten Ausführungsform ist daher die Einrichtung als Leistungsschalter mit Stromrichtungserkennung ausgebildet. Vorzugsweise ist dabei der Leistungsschalter als Leistungs-MOSFET ausgebildet. Dabei ist es weiter möglich, den Starter-Batterie-Schalter und die Einrichtung als ein einziges Bauelement auszuführen, wobei dann eine entsprechende Ansteuerlogik notwendig ist, die gewährleistet, dass im Startvorgang der Schalter durchgeschaltet ist und nachfolgend bei einem Strom in Richtung Batterie (Ladebetrieb) durchgeschaltet ist und in umgekehrter Richtung (Kurzschluss) gesperrt ist.

In einer weiteren bevorzugten Ausführungsform ist die Batterie im Heck und der Generator im Motorraum angeordnet.

In einer weiteren bevorzugten Ausführungsform ist der Starter-Batterie-Schalter und/oder der Starter-Schalter als Relais ausgebildet, wobei diese vorzugsweise durch Schließen des Zündschlossschalters bestromt werden.

In einer weiteren bevorzugten Ausführungsform werden der Starter-Batterie-Schalter und der Starter-Schalter nacheinander in vorgegebener Reihenfolge geschaltet, so dass ein Relais bzw. Schalter leistungslos geschaltet werden kann.

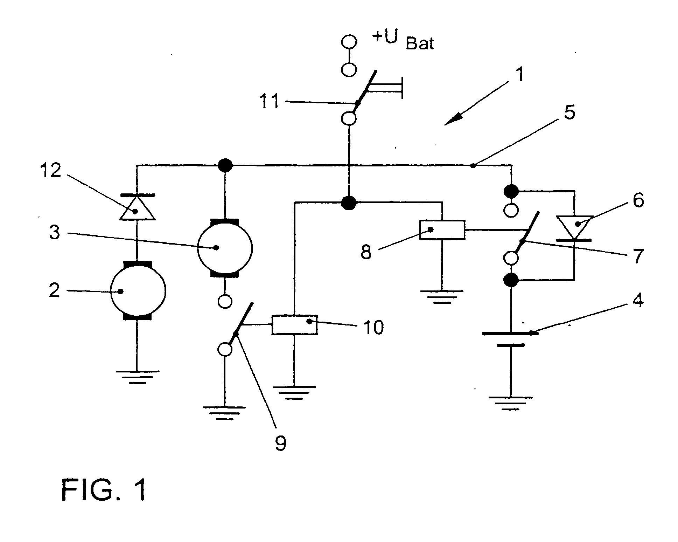

Die Erfindung wird nachfolgend anhand eines bevorzugten Ausführungsbeispieles näher erläutert. Die einzige Figur zeigt ein schematisches Blockschaltbild eines erfindungsgemäßen Bordnetzes.

Das Bordnetz 1 umfasst einen Generator 2, einen Starter 3, eine Batterie 4, die über eine gemeinsame Start-Lade-Leitung 5 miteinander verbunden sind. In Reihe zur Batterie 4 ist eine Parallelschaltung aus einer Batterie-Diode 6 und einem Kontakt 7 eines Batterie-Starter-Relais 8 angeordnet. In Reihe zum Starter 3 ist ein Kontakt 9 eines Starter-Relais 10 angeordnet. Das Batterie-Starter-Relais 8 und das Starter-Relais 10 sind ebenfalls parallel geschaltet und über einen Zündschlossschalter 11 mit der Batterie 4 verbunden. In Reihe zum Generator 2 ist eine Generator-Diode 12 dargestellt, die einen AC/DC-Wandler symbolisiert. Im Ruhezustand sind alle Kontakte 7, 9 und der Zündschlossschalter 11 offen. Die Batterie-Diode 6 ist dabei in Sperrrichtung gepolt, da der Generator 2 nicht erregt ist. Somit fällt die gesamte Batteriespannung U_{Bat} als Sperrspannung über der Batterie-Diode 6 ab. Damit ist die Starter-Lade-Leitung 5 spannungslos, so dass bei einem Kurzschluss gegen Fahrzeugmasse kein Batteriestrom fließen kann. Beim Starten des Kraftfahrzeuges wird der Zündschlossschalter 11 geschlossen. Dadurch fließt ein Strom durch das Batterie-Starter-Relais 8 und das Starter-Relais 10, wodurch die beiden Kontakte 7, 9 schließen. Durch den geschlossenen Kontakt 7 wird die Batterie-Diode 6 überbrückt. Dadurch kann ein Strom von der Batterie 4 zum Starter 3 fließen, der dann den nicht dargestellten Verbrennungsmotor startet. Nach Beendigung des Startvorgangs öffnet der Zündschlossschalter 11 und die beiden Kontakte 7, 9 fallen ab. Dadurch ist dann die Batterie-Diode 6 wieder wirksam. Nach erfolgter Erregung des Generators 2 liegt dessen Ausgangsspannung über der Batteriespannung und die Batterie-Diode 6 ist in Flussrichtung gepolt. Dadurch fließt ein gerichteter Ladestrom vom Generator 2 zur Batterie 4. Im Falle eines Unfalls geht im Regelfall der Motor aus, so dass auch der Generator 2 keine Spannung mehr liefert. In diesem Fall verhindert dann wie im Ruhestand die Batterie-Diode 6 einen Kurzschlussstrom von der Batterie 4.

Wird nun über geeignete Maßnahmen sichergestellt, dass die Kontakte 7, 9 in einer bestimmten Reihenfolge schließen bzw. öffnen, kann ein Kontakt leistungslos schalten und entsprechend preiswerter ausgebildet werden. Dabei muss der Kontakt, der zuletzt schließt, auch zuerst geöffnet werden.

## Patentansprüche

1. Bordnetz für Kraftfahrzeuge, umfassend einen Generator, einen Starter, mindestens eine Batterie zum Bestromen des Starters über eine Starterleitung, wobei die Batterie über eine Ladeleitung mit dem Generator verbunden ist, wobei zwischen Generator und Batterie eine Einrichtung angeordnet ist, die einen Stromfluss von der Batterie in Richtung des Generators verhindert, wobei
die Starterleitung und die Ladeleitung als gemeinsame Start-Lade-Leitung (5) ausgebildet ist und in Reihe zum Starter (3) ein Starter-Schalter (9) angeordnet ist, und ein Starter-Batterie-Schalter (7) und der Start-Schalter (9) jeweils nur im Startvorgang geschlossen sind,
**dadurch gekennzeichnet, dass** parallel zu der Einrichtung der Starter-Batterie-Schalter (7) angeordnet ist.

2. Bordnetz nach Anspruch 1, **dadurch gekennzeichnet, dass** die Einrichtung unmittelbar an der Batterie (4) angeordnet ist.

3. Bordnetz nach Anspruch 1 oder 2, **dadurch gekennzeichnet, dass** die Einrichtung als Leistungsdiode (6) oder als Leistungsschalter mit Stromrichtungserkennung ausgebildet ist.

4. Bordnetz nach einem der vorangegangenen Ansprüche, **dadurch gekennzeichnet, dass** die Batterie (4) im Heckbereich eines Kraftfahrzeuges angeordnet ist.

5. Bordnetz nach einem der vorangegangenen Ansprüche, **dadurch gekennzeichnet, dass** der Starter-Batterie-Schalter (7) und/oder der Starter-Schalter (9) als Relais ausgebildet sind.

6. Bordnetz nach einem der vorangegangenen Ansprüche, **dadurch gekennzeichnet, dass** der Starter-Batterie-Schalter (7) und der Starter-Schalter (9) nacheinander in vorgegebener Reihenfolge geschaltet werden.

## Claims

1. Motor vehicle electrical system, comprising a generator, a starter, at least one battery for supplying current to the starter via a starter line, the battery being connected to the generator via a charging line, a device being arranged between the generator and the battery which prevents a current flow from the battery in the direction of the generator, the starter line and the charging line being in the form of a common starting/charging line (5), and a starter switch (9) being arranged in series with the starter (3), and a starter battery switch (7) and the starter switch (9) each being connected only in the starting operation, **characterized in that** the starter battery switch (7) is arranged in parallel with the device.

2. Vehicle electrical system according to Claim 1, **characterized in that** the device is arranged directly at the battery (4).

3. Vehicle electrical system according to Claim 1 or 2, **characterized in that** the device is in the form of a power diode (6) or in the form of a power switch having current direction identification.

4. Vehicle electrical system according to one of the preceding claims, **characterized in that** the battery (4) is arranged in the rear region of a motor vehicle.

5. Vehicle electrical system according to one of the preceding claims, **characterized in that** the starter battery switch (7) and/or the starter switch (9) are in the form of a relay.

6. Vehicle electrical system according to one of the preceding claims, **characterized in that** the starter battery switch (7) and the starter switch (9) are connected one behind the other in a predetermined sequence.

## Revendications

1. Réseau de bord pour véhicules automobiles comprenant un alternateur, un démarreur, au moins une batterie pour alimenter le démarreur en électricité par le biais d'une ligne de démarreur, la batterie étant reliée à l'alternateur par le biais d'une ligne de charge, un dispositif qui empêche une circulation du courant de la batterie vers l'alternateur étant disposé entre l'alternateur et la batterie, la ligne de démarreur et la ligne de charge étant réalisées sous la forme d'une ligne commune de démarrage et de charge (5) et un commutateur de démarreur (9) étant disposé en série avec le démarreur (3) et un commutateur de démarreur-batterie (7) et le commutateur de démarrage (9) n'étant respectivement fermés que lors du processus de démarrage, **caractérisé en ce que** le commutateur de démarreur-batterie (7) est branché en parallèle avec le dispositif.

2. Réseau de bord selon la revendication 1, **caractérisé en ce que** le dispositif est disposé directement sur la batterie (4).

3. Réseau de bord selon la revendication 1 ou 2, **caractérisé en ce que** le dispositif est réalisé sous la forme d'une diode de puissance (6) ou d'un commutateur de puissance avec détection du sens du courant.

4. Réseau de bord selon l'une des revendications précédentes, **caractérisé en ce que** la batterie (4) est disposée dans la zone arrière d'un véhicule automobile.

5. Réseau de bord selon l'une des revendications précédentes, **caractérisé en ce que** le commutateur de démarreur-batterie (7) et/ou le commutateur de démarreur (9) sont réalisés sous la forme de relais.

6. Réseau de bord selon l'une des revendications précédentes, **caractérisé en ce que** le commutateur de démarreur-batterie (7) et/ou le commutateur de démarreur (9) sont commutés l'un après l'autre dans un ordre prédéfini.
